# FASCICULE DE BREVET EUROPEEN

(11) **EP 1 043 534 B1**
(45) Date de publication et mention de la délivrance du brevet: **06.08.2003**
(21) Numéro de dépôt: 00420059.8
(22) Date de dépôt: 30.03.2000
(51) Int. Cl.: F16L 3/26, H02G 9/06

(54) **Gaine annelée pour réseaux sanitaires bituyaux**
Gewellte Hülse für Doppel-Rohr-Sanitäreinrichtung
Corrugated sleeve for twin pipe sanitary system

(30) Priorité: 02.04.1999 FR 9904374
(43) Date de publication de la demande: 11.10.2000
(73) Titulaire: ETS COURANT SA, 01920 Manziat (FR)
(72) Inventeur: Courant, Alain, 01190 Chavannes sur Reyssouze (FR)
(74) Mandataire: Maureau, Philippe

(56) Documents cités:
- EP-A- 0 814 553
- DE-A- 2 341 849

## Description

L'invention est relative à une gaine annelée pour réseaux sanitaires.

Pour encastrer dans une paroi un réseau composé de deux tuyaux, et par exemple les canalisations d'eau chaude et d'eau froide d'un réseau sanitaire, il est nécessaire de les disposer individuellement dans une gaine protectrice, en général annelée, pour permettre leur dilatation ainsi que leur remplacement éventuel. Cela présente l'inconvénient d'augmenter l'encombrement transversal du réseau et de prévoir des passages de section appropriée.

Il est aussi possible de disposer les deux tuyaux d'un même réseau dans une unique gaine, mais alors le tuyau d'eau chaude est juxtaposé à celui d'eau froide, ce qui favorise les échanges thermiques et les pertes d'énergie. Le document EP-A-814 553 décrit une telle gaine.

La présente invention a pour objet de remédier à ces inconvénients en fournissant une gaine annelée, spécialement adaptée aux réseaux d'eau sanitaire.

A cet effet, la gaine selon l'invention présente, en section transversale, une forme oblongue ou elliptique et est divisée en deux compartiments longitudinaux et espacés transversalements aptes chacun à recevoir un tuyau, par des saillies internes discontinues se faisant vis à vis et alignées longitudinalement.

Ces saillies, qui pénètrent dans l'intervalle entre les tuyaux, évitent tout contact entre eux et suppriment donc tous les risques de transfert thermique par conduction directe.

Dans une forme d'exécution de l'invention, les saillies internes sont formées par déformation locale de la paroi constitutive de la gaine annelée.

L'invention sera mieux comprise à l'aide de la description qui suit en référence au dessin schématique annexé représentant, à titre d'exemple, une forme d'exécution de la gaine annelée selon l'invention.

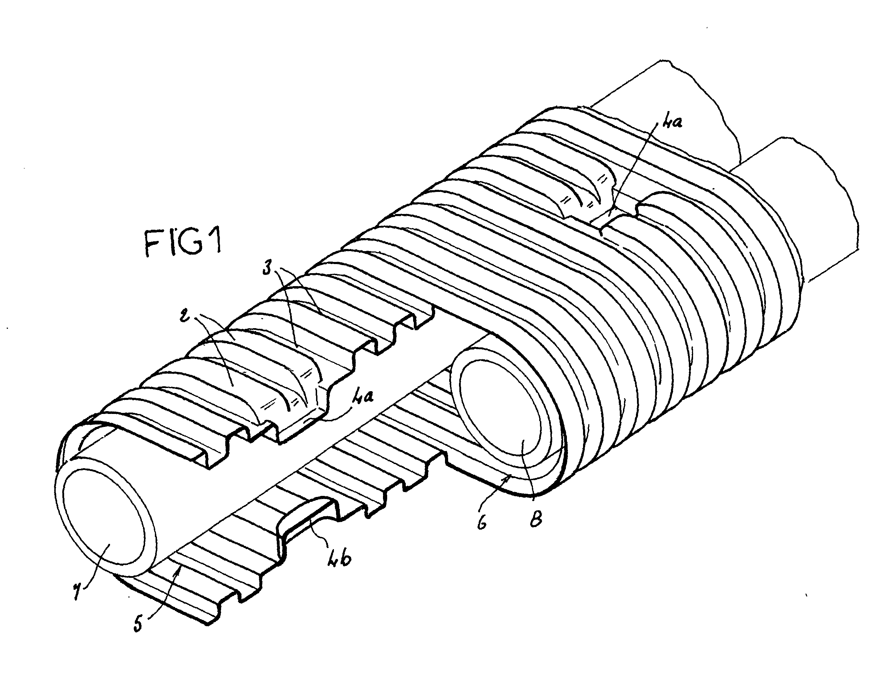

Figure 1 est une vue partielle en perspective d'une demi gaine,
Figure 2 est une vue de face en bout de la gaine annelée,
Figure 3 est une vue en coupe longitudinale.

Dans la forme d'exécution représentée, la gaine annelée selon l'invention présente, en section transversale, une forme oblongue, c'est-à-dire une forme rectangulaire à bords arrondis. Sa paroi comporte longitudinalement une alternance de nervures périphériques 2 et de rainures 3.

Cette gaine est divisée par des saillies internes 4a, 4b en deux compartiments 5 et 6, aptes chacun à recevoir un tuyau, respectivement 7, 8 d'eau sanitaire et par exemple d'eau chaude et d'eau froide. Ces deux tuyaux peuvent être en cuivre ou en matière plastique, et par exemple, en polyéthylène réticulé.

Dans la forme d'exécution représentée, chacune des saillies 4a, 4b, est constituée par une déformation locale de la paroi constitutive de la gaine. Cette déformation s'étend longitudinalement sur au moins deux nervures 2, mais il est évident qu'elle peut s'étendre sur une seule nervure ou sur plus de deux nervures, pourvu qu'elle soit discontinue pour laisser les possibilités de déformation à la gaine annelée.

Chacune des saillies 4a, 4b s'étend transversalement sur une largeur qui dépend de la dimension diamétrale des tuyaux 7 et 8, et qui est déterminée afin que ces tuyaux ne puissent pas venir en contact tangentiel l'un avec l'autre.

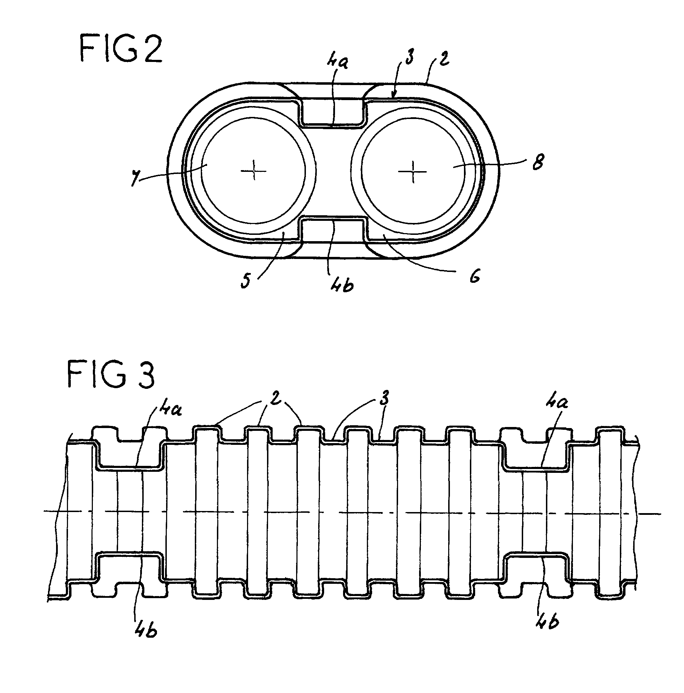

En d'autres termes, et comme le montre la figure 2, les saillies 4a, 4b assurent l'espacement des deux tuyaux et évitent ainsi le transfert de calories entre eux par conduction directe. Il est évident que les saillies 4a, 4b sont alignées longitudinalement sur toute la longueur de la gaine. Tout en restant en vis à vis, les saillies 4a, 4b peuvent être disposées l'une au-dessous de l'autre, ou au contraire être réparties en quinconce.

On notera que, lorsque les deux tuyaux 7 et 8 sont disposés dans la gaine, l'air contenu dans les espaces qui les entourent contribue à leur isolation thermique par rapport à l'environnement.

Enfin, la forme oblongue de la gaine limite son encombrement et favorise sa mise en place dans les parois en réduisant la dimension des saignées devant être réalisées.

## Revendications

1. Gaine annelée pour réseau sanitaires bituyaux présentant, en section transversale, une forme oblongue ou elliptique et divisée en deux compartiments (5, 6), longitudinaux, espacés transversalement et aptes chacun à recevoir un tuyau (7, 8) par des saillies internes (4a, 4b) discontinues, se faisant vis à vis et alignées longitudinalement.

2. Gaine annelée selon la revendication 1, dans laquelle les saillies internes (4a, 4b) sont formées par déformation locale de la paroi constitutive de la gaine annelée.

## Patentansprüche

1. Gewellte Hülse für ein Zweileitungs-Sanitärnetz, die im Querschnitt eine längliche oder elliptische Form aufweist und in zwei Längsfächer (5, 6) unterteilt ist, die in Querrichtung voneinander beabstandet und jeweils geeignet sind, durch unterbrochene, einander gegenüberliegende und in Längsrichtung aufeinander ausgerichtete, innere Vorsprünge (4a, 4b) eine Leitung (7, 8) aufzunehmen.

2. Gewelite Hülse nach Anspruch 1, bei der die inneren Vorsprünge (4a, 4b) durch örtliche Verformung der Wand gebildet werden, welche die gewellte Hülse bildet.

## Claims

1. Ringed sheath for twin-pipe sanitary systems, the said sheath having an oblong or elliptical shape in cross-section and being divided into two longitudinal compartments (5, 6) which are spaced apart transversely and adapted to each receive a pipe (7, 8) by discontinuous internal projections (4a, 4b) which face one another and are aligned longitudinally.

2. Ringed sheath according to claim 1, wherein the internal projections (4a, 4b) are formed by local deformation of the constituent wall of the said ringed sheath.
